Europäisches Patentamt

(19) European Patent Office

Office européen des brevets

(11) **EP 0 651 158 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int Cl.6: **F02P 5/15**, B60G 17/015, F16F 15/02

(21) Anmeldenummer: **93117412.2**

(22) Anmeldetag: **27.10.1993**

(54) **Verfahren zum Unterdrücken von Schwingungen des Antriebsstranges eines Kraftfahrzeugs durch Zündzeitpunktsteuerung**

Method for the suppression of vibrations of the drive train of a automotive vehicle by ignition point control

Méthode pour la suppression de vibration dans l'arbre de transmission d'un véhicule automobile par le contrôle du point d'allumage

(84) Benannte Vertragsstaaten:
**DE FR GB**

(43) Veröffentlichungstag der Anmeldung:
**03.05.1995 Patentblatt 1995/18**

(73) Patentinhaber: **SIEMENS AKTIENGESELLSCHAFT**
**80333 München (DE)**

(72) Erfinder:
- **Häuser, Andreas, Dipl.-Ing.**
  **D-93059 Regensburg (DE)**
- **Treinies, Stefan, Dipl.-Ing.**
  **D-93073 Neutraubling (DE)**
- **Vogt, Thomas, Dipl.-Ing.**
  **D-93053 Regensburg (DE)**

(56) Entgegenhaltungen:
EP-A- 0 216 291          EP-A- 0 589 297
WO-A-91/15676            DE-A- 3 018 033
DE-A- 4 009 791          DE-A- 4 009 792
DE-C- 4 201 861          GB-A- 2 227 284
US-A- 4 498 438

**Beschreibung**

Die Erfindung betrifft ein Verfahren nach dem Oberbegriff von Anspruch 1 und eine nach diesem Verfahren arbeitende Motorsteuerung. Ein bekanntes derartiges Verfahren (DE 4009791 A1) dient zur Unterdrückung von Schwingungen im Antriebsstrang eines Kraftfahrzeugs, dessen Motordrehzahl von einem Sensor erfaßt wird. Beim Auftreten von solchen Schwingungen wird dem Motor eine in einer Korrektureinrichtung ermittelte Stellgröße zugeführt, die durch Verändern des Zündzeitpunktes das Motordrehmoment verringert. Der Zündzeitpunkt wird z.B. verändert, indem von einem ersten auf ein zweites Zündkennfeld eines Zündsteuergeräts umgeschaltet wird.

Bekannt ist auch eine Regelvorrichtung für den Motor eines Kraftfahrzeugs, mit der Schwingungen der Karosserie beim Beschleunigen des Fahrzeugs durch Verstellen des Zündzeitpunkts verhindert werden. Dazu werden die Drehzahl des Motors, die zeitliche Änderung der Drehzahl und die Drehzahländerungsrichtung erfaßt. Der aus einem Kennfeld ausgelesene Zündzeitpunkt wird nach der Größe und dem Vorzeichen der Drehzahländerung korrigiert (DE 37 17 368 A1).

Ein Verfahren mit den Merkmalen des Oberbegriffs von Anspruch 1 ist in der nicht vorveröffentlichten Patentanmeldung EP-A 0 589 297 beschrieben. Um Ruckelschwingungen des Antriebsstrangs eines Kraftfahrzeugs zu unterdrücken, wird aus der Motordrehzahl der Drehzahlgradient abgeleitet und zum Aktivieren der Antiruckelfunktion durch Reduktion des Motordrehmoments ausgewertet. Unterschreitet der Drehzahlgradient einen unteren Grenzwert, wird der Zündwinkel um einen drehzahlabhängigen Betrag nach Spät verstellt; überschreitet er einen oberen Grenzwert, so wird der Zündwinkel nach Früh zurückverstellt. Die Grenzwerte sind drehzahlabhängig.

Bei einem bekannten Verfahren zur Unterdrückung von Schwingungen im Antriebsstrang eines Kraftfahrzeugs (DE-A 40 09 791) wird die in einem mit festem Takt getakteten Zähler zur Verfügung stehende Motordrehzahl nach der Zeit differenziert und dann werden Extreme der Beschleunigung ermittelt. Bei einem Maximum der Beschleunigung wird auf ein zweites Kennfeld umgeschaltet, das Zündzeitpunkte für ein geringers Motormoment enthält. Bei einem Minimum der Beschleunigung wird auf ein erstes Kennfeld mit Zündzeitpunkten für höheres Motormoment zurückgeschaltet.

Die Schwingungen im Antriebsstrang eines Kraftfahrzeugs - das sogenannte Ruckeln - die insbesondere bei einem abrupten Übergang von niedriger Teillast auf Vollast im unteren Drehzahlbereich während eines Beschleunigungsvorganges auftreten, sind aber gegen Regeleingriffe empfindlich.

Der Erfindung liegt die Aufgabe zugrunde, Schwingungen im Antriebsstrang eines Kraftfahrzeugs schonend zu unterdrücken.

Diese Aufgabe wird erfindungsgemäß durch das Verfahren nach Anspruch 1 und durch die Motorsteuerung nach Anspruch 10 gelöst. Zweckmäßige Weiterbildungen der Erfindung sind den Unteransprüchen zu entnehmen.

Die Vorteile der Erfindung liegen insbesondere darin, daß mit ihr auch die Abhängigkeit der Triebstrangschwingungen von der Motordrehzahl, von der Fahrzeuggeschwindigkeit, von dem jeweils eingelegten Gang oder der jeweiligen Übersetzung und von dem Fortschreiten des Regelvorgangs berücksichtigt werden können.

Ausführungsbeispiele der Erfindung werden im folgenden anhand der Zeichnung erläutert. Es zeigen:

Figur 1     den Motor eines Kraftfahrzeugs und eine Motorsteuerung gemäß der Erfindung;

Figur 2     ein die erfindungsgemäße Antiruckelfunktion erläuterndes Diagramm;

Figur 3     bei dem Verfahren nach Figur 2 verwendete Startschwellen in Abhängigkeit von der Drehzahl und

Figur 4     (Figur 4a und Figur 4b) ein Ablaufdiagramm des erfindungsgemäßen Verfahrens.

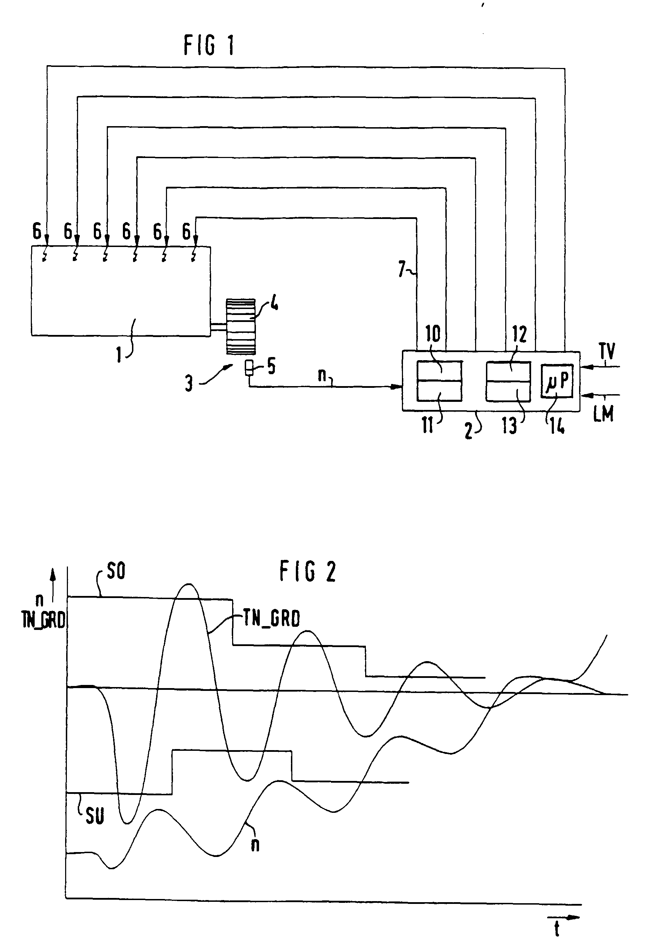

In der schematischen Darstellung von Figur 1 sind nun die zur Erläuterung des erfindungsgemäßen Verfahrens erforderlichen Bestandteile eines Kraftfahrzeugantriebs dargestellt. Ein Motor 1 wird von einer Motorsteuerung oder Motorsteuergerät 2 gesteuert. Die Motorsteuerung 2 empfängt Motordrehzahlwerte von einem Drehzahlsensor 3, der aus einem Zahnrad 4 und einem Induktionsfühler 5 besteht. Das Zahnrad 4 ist an der Kurbelwelle des Motors befestigt, der Induktionsfühler 5 wertet die Änderungen des Magnetfelds aus, die durch die sich an ihm vorbei bewegenden Zähne - in der Regel 58 Zähne - des Zahnrads 4 verursacht werden.

In der Motorsteuerung 2 wird die Drehzahl in Form von Segmentzeiten erfaßt und verarbeitet. Eine Segmentzeit TN entspricht bei einem Sechszylindermotor einem Winkel von 120° auf der Kurbelwelle KW und wird als die Zeit gemessen, in der sich z.B. die Zähne Nummer 1 bis 21 an dem Induktionsfühler 5 vorbei bewegen. Bei einem Fünfzylindermotor entspricht eine Segmentzeit einem Winkel von 144° KW und bei einem Vierzylinder einem Winkel von 180° KW. Die Segmentzeit ist der Drehzahl n umgekehrt proportional: $TN \sim 1/n$.

Die Motorsteuerung 2 verarbeitet auch ein über die angesaugte Luftmasse informierendes Signal LM, das von einem hier nicht dargestellten bekannten Luftmassenmesser im Ansaugtrakt des Motors 1 geliefert wird. Sie kann außerdem ein über die Fahrzeuggeschwindigkeit informierendes Tachosignal TV verarbeiten. Steuerausgänge der Motorsteuerung 2 sind über Leitungen 7 mit Zündkerzen 6 verbunden. Die Motorsteuerung 2 steuert in bekannter Weise auch noch andere Funktionen des Motors 1 - z.B. die Einspritzung von Kraftstoff -, diese sind aber hier nicht dargestellt, da sie von der Erfindung nicht beeinflußt werden. Die Erfindung unterdrückt im Antriebsstrang auftretende Schwingungen durch eine gezielte Verringerung des Motordrehmoments über eine Spätverstellung des Zündwinkels während der positiven Halbwelle der Drehzahlschwingung. Die Drehzahlauswertung erfolgt in der Motorsteuerung 2 über

Segmentzeitgradienten. Ein Segmentzeitgradient TN_GRD wird berechnet für

- niedrige Drehzahlen aus zwei aufeinanderfolgenden Segmentzeiten:

$$TN\_GRD = (TN_n - TN_{n-1}) / TN_n$$

und

- hohe Drehzahlen aus zwei aufeinanderfolgenden Umdrehungszeiten:

$$TN\_GRD = (TU_n - TU_{n-1}) / TU_n$$

Die Segmentzeitgradienten werden für jedes Segment neu berechnet. Die Grenze zwischen beiden Berechnungsarten liegt bei einer vorgegebenen Motordrehzahl von z.B. 1900 U/min.

Die Motorsteuerung 2 enthält mehrere Kennfelder, von denen hier nur vier Kennfelder dargestellt sind. In einem Grund- oder Basis-Zündkennfeld 10 sind die Zündwinkel in Abhängigkeit von der Motordrehzahl und der Motorlast oder Drosselklappenstellung abgelegt. In einem zweiten Zündkennfeld 11 sind entsprechende Zündzeitpunkte für ein verringertes Motordrehmoment abgelegt. Die Verringerung des Motordrehmoments kann durch Umschalten von dem Zündkennfeld 10 auf das Zündkennfeld 11 oder aber auch durch Berechnen von nach spät verstellten Zündwinkeln erfolgen.

Zwei weitere Kennfelder 12 und 13 enthalten noch zu erläuternde Schwellwerte zum Aktivieren der Antiruckelfunktion, d.h. zum Auslösen der Drehmomentreduzierung.

In Figur 2 sind die Motordrehzahl n bei einem Beschleunigen des Fahrzeugs und der daraus abgeleitete Segmentzeitgradient TN-GRD, sowie ein unterer Schwellwert SU und ein oberer Schwellwert SO über der Zeit t aufgetragen. Um die Antiruckelfunktion zu aktivieren, müssen folgende Bedingungen erfüllt sein.

- Die Kühlwassertemperatur muß über einem vorgegebenen Wert, zum Beispiel über 30 °C, liegen.
- Die Motordrehzahl muß in einem vorgegebenen Bereich liegen, z.B. zwischen 1000 und 3500 U/min.
- Die Fahrzeuggeschwindigkeit muß in einem vorgegebenen Bereich liegen, zum Beispiel unter 50 km/h.
- Der Motor muß in Teillast arbeiten.
- Kein Diagnosefehler darf erkannt worden sein bei:

Kurbelwelle, Nockenwelle, Zündung und Einspritzung.

Die Aktivierung der Antiruckelfunktion erfolgt über eine Kennfeldumschaltung: Die Schwellwerte zum Auslösen der Momentenreduzierung sind in den beiden Schwellwert-Kennfeldern 12 und 13 (Figur 1) abgelegt. Unterschreitet der Segmentzeitgradient den zugehörigen unteren Schwellwert in dem ersten Schwellwert-Kennfeld 12 so wird ein Zündwinkeleingriff durchgeführt, indem von dem ersten oder Grund-Zündkennfeld 10 auf das zweite Zündkennfeld 11 umgeschaltet wird. Nach der so erfolgten Triggerung der Antiruckelfunktion, d.h. nach Verschieben des Zündzeitpunkts nach "spät", wird auf das zweite Schwellwert-Kennfeld 13 umgeschaltet, das gegenüber dem ersten Kennfeld 12 höhere Schwellen enthält. Nach einer frei vorgebbaren Anzahl von Triggerungen (z.B. zwei bis drei Triggerungen) spätestens jedoch nach einer vorgebbaren Zeitspanne (z.B. 750 ms). - von der ersten Triggerung an gerechnet -, wird wieder auf das erste Kennfeld 12 zurückgeschaltet.

Überschreitet der Drehzahlgradient den jeweiligen oberen Schwellwert SO, wird die Antiruckelfunktion (im folgenden auch als AR-Funktion bezeichnet) ausgeschaltet, d.h. auf das Grund-Zündkennfeld 10 zurückgeschaltet. Der untere Schwellwert SU und der obere Schwellwert SO sind von der Motordrehzahl n abhängig, bei höheren Drehzahlen nimmt der untere Grenzwert größere Werte und der obere Grenzwert kleinere Werte als bei kleinen Drehzahlen an. Dies ist aus Figur 2 ersichtlich, in der mit zunehmender Zeit die Drehzahl größer wird und die beiden Grenzwerte SU und SO im Mittel sich einander nähern.

Die Spätverstellung des Zündwinkels beim Aktivieren der Antiruckelfunktion erfolgt mit einer Begrenzung der Änderungsgeschwindigkeit (z.B. auf 6° Zündwinkel / Segment), durch die Zündwinkelsprünge gedämpft werden.

Nachdem die erwähnte Anzahl von Triggerungen erfolgt ist, d.h. die vorgegebene Anzahl von Motoreingriffen mit Drehmomentreduzierung durchgeführt worden ist oder nachdem eine vorgegebene maximale Zeitspanne T MAX abgelaufen ist, beginnt eine Totzeitspanne TOTZ_AR, während derer die AR-Funktion deaktiviert bleibt. Übersteigt jedoch während der Totzeitspanne der Drosselklappengradient, d.h. die Änderungsgeschwindigkeit der Drosselklappenbetätigung, einen vorgegebenen Grenzwert, so wird die Totzeit abgebrochen. Es kann dann die AR-Funktion wieder ausgelöst werden.

Der sich aus der Antiruckelfunktion ergebende Sollzündwinkel gemäß dem Zündkennfeld 11 wird mit den Sollzündwinkeln verglichen, die sich aus anderen Zündwinkelkorrekturen bei Teillast oder Vollast ergeben, und es wird dann der jeweils spätere Zündwinkel eingestellt. Der Übergang in Richtung "früh" auf den Basiszündwinkel nach Beenden der Drehmomentreduzierung erfolgt stets mit einer Begrenzung der Zündwinkel-Änderungsgeschwindigkeit.

Die Momentenreduzierung kann auch durch eine Erkennung einer Beschleunigungsanreicherung ausgelöst werden. Die Schwellwerte zur Auslösung des Zündeingriffs sind in einem Kennfeld wie dem Schwellwert-Kennfeld 12 abgelegt. Nachdem die ansteigende Flanke eines Signals, das den Betriebszustand Beschleunigungsanreicherung BA anzeigt, erkannt worden ist, wird die Antiruckelfunktion für eine Zeitspanne T_MAX_BA aktiviert. Fällt in diesem Zeitraum der Segmentzeitgradient unter den entsprechenden Schwellwert des Kennfeldes, so erfolgt eine vorgebbare Anzahl von Triggerungen oder Auslösungen des Zündeingriffs. Bei der ersten Triggerung läuft eine zweite, ebenfalls vorgegebene Zeitspanne an. Nachdem eine dieser Zeitspannen oder die vorgegebene Anzahl Triggerungen abgelaufen ist, wird die AR-Funktion solange inaktiviert, bis wieder eine ansteigende Flanke des Signals "BA" erkannt wird.

Die Momentenreduzierung wird auch abgebrochen, wenn die Betriebszustände Schubreduzierung oder Schubabschaltung aktiv sind.

Mit größer werdenden Gängen steigt die Frequenz der Ruckelschwingungen. Deshalb werden durch eine Gangerkennung, die durch einen in der Motorsteuerung 14 enthaltenen Mikroprozessor 14 anhand des Drehzahl - und des Geschwindigkeitssignals durchgeführt wird, nachstehende Größen an die einzelnen Gänge angepaßt. Mit steigendem Gang:

- werden die Schwellwerte SU zur Auslösung der AR-Funktion höher und die Schwellwerte SO zur Beendigung der Funktion tiefer gelegt,
- wird die Zündwinkel-Änderungsbegrenzung erhöht und die Zahl der Segmente für die Verzögerung der Zündwinkeländerung reduziert, - wird die maximale Eingriffszeit T_MAX verkürzt.

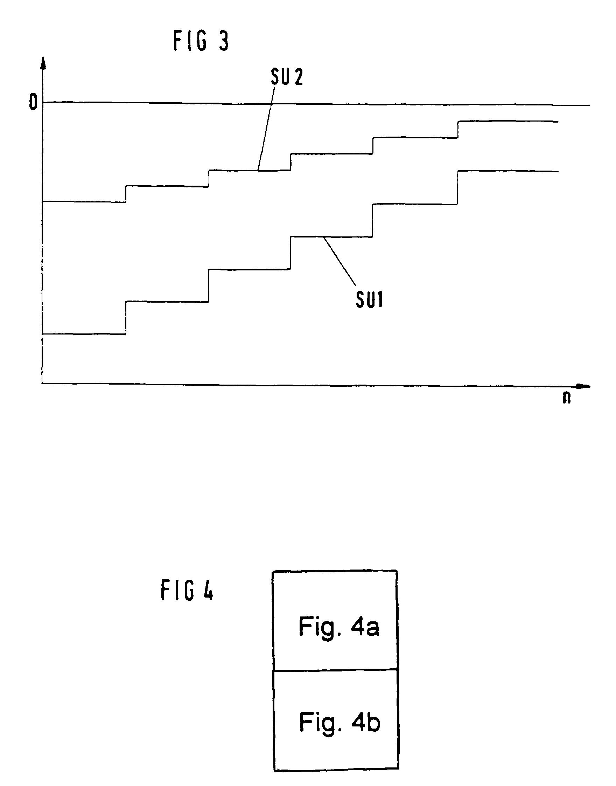

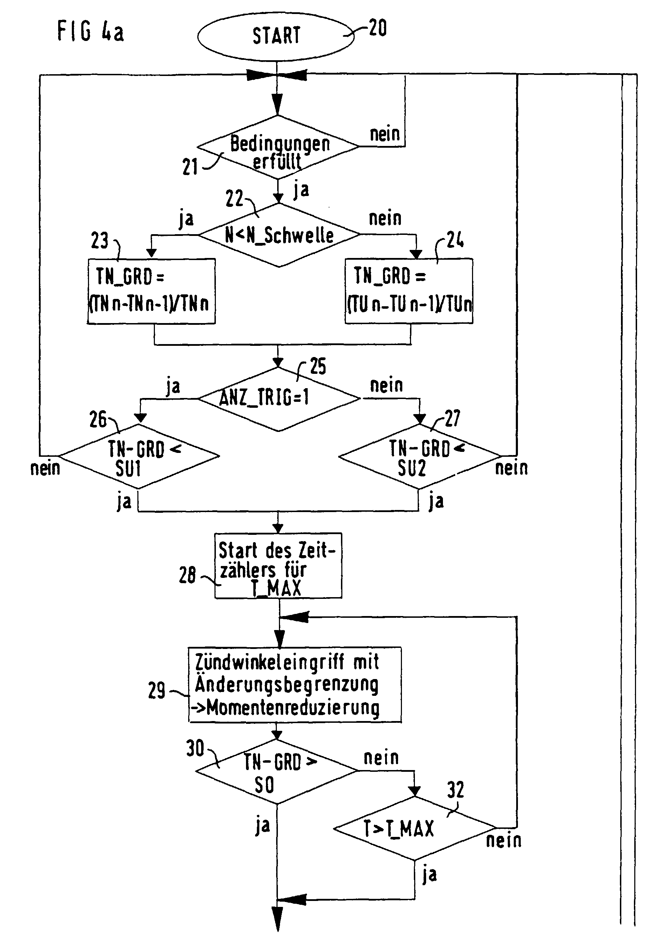

In Figur 3 ist die Abhängigkeit der unteren Schwellwerte oder Startschwellen SU1 (SU aus dem Kennfeld 12) und SU2 (SU aus dem Kennfeld 13) für die AR-Funktion von der Drehzahl dargestellt.

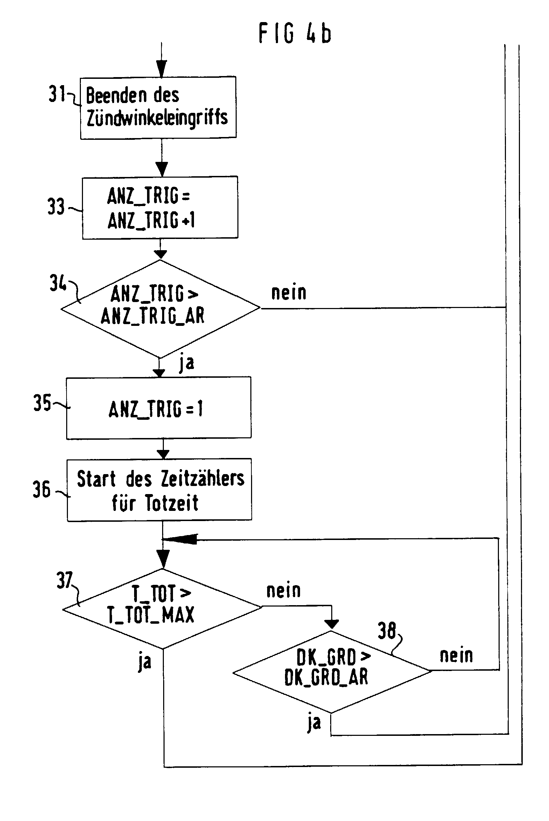

Aus Figur 4 ist ein Ablaufdiagramm des Programms ersichtlich, das der Mikroprozessor 14 der Motorsteuerung 2 beim Ausführen der Antiruckelfunktion abarbeitet:

Nach einem Startschritt 20 (Fig. 4a) wird in einer Abfrage 21 festgestellt, ob die vorstehend genannten Bedingungen für die AR-Funktion erfüllt sind. Wenn nein, erfolgt ein Rücksprung zum Start. Wenn ja, wird in einer Abfrage 22 festgestellt, ob die Drehzahl unter einer vorgegebenen Schwelle von z.B. 1900 U/min liegt. Wenn ja, wird der Segmentzeitgradient in einem Block 23 aus zwei aufeinanderfolgenden Segmentzeiten, wenn nein, in einem Block 24 aus zwei aufeinanderfolgenden Umdrehungszeiten berechnet.

Mit einer Frage 25 wird festgestellt, ob die Anzahl der Triggerungen = 1 ist. Wenn ja, wird in einer Anfrage 26 festgestellt, ob der Segmentzeitgradient kleiner als der untere Schwellwert SU1 aus dem ersten Schwellwert-Kennfeld 12 ist. In einer Abfrage 27 wird festgestellt, ob er kleiner als der untere Schwellwert SU2 aus dem Kennfeld 13 ist. Ist das Ergebnis der jeweiligen Abfrage nein, erfolgt ein Rücksprung zum Start, ist es ja, erfolgt in beiden Fällen in einem Schritt 28 der Start eines Zeitzählers für die maximale Zeitspanne T_MAX.

In einem Programmschritt 29 wird ein Zündwinkeleingriff mit Änderungsbegrenzung durchgeführt, der zu einer Reduzierung des Motordrehmoments führt.

In einer Abfrage 30 wird festgestellt, ob der Segmentzeitgradient größer als der obere Schwellwert SO ist. Falls ja, wird in einem Schritt 31 der Zündwinkeleingriff beendet (Figur 4b). Falls nein, wird in einer Abfrage 32 festgestellt, ob die maximale Zeitspanne T_MAX verstrichen ist. Wenn nein, erfolgt ein Rücksprung vor den Schritt 29, wenn ja, wird in dem Schritt 31 der Zündwinkeleingriff beendet.

In einem Schritt 33 wird die Anzahl Triggerungen um 1 erhöht. In einer Anfrage 34 wird festgestellt, ob die vorgegebene maximale Anzahl von Triggerungen der AR-Funktion überschritten ist. Wenn nein, erfolgt ein Rücksprung zum Start, wenn ja, wird in einem Schritt 35 die Anzahl Triggerungen = 1 gesetzt. In einem Schritt 36 wird ein Zeitzähler für die Totzeitspanne TOTZ_AR gestartet.

In einer Anfrage 37 wird festgestellt, ob die maximale Totzeitspanne überschritten ist. Wenn ja, erfolgt ein Rücksprung zum Start, wenn nein, wird in einer Abfrage 38 festgestellt, ob der Drosselklappengradient einen vorgegebenen Wert überschreitet. Wenn nein, erfolgt ein Rücksprung vor den Schritt 37 wenn ja, erfolgt ein Rücksprung zu dem Start. Damit ist ein Programmdurchlauf beendet.

In den vorstehenden Ausführungsbeispielen ist die Information über die Motordrehzahl immer über den Segmentzeit-Gradienten ausgewertet worden. Statt mit dem Segmentzeit-Gradienten TN-GRD kann die Antiruckelfunktion auch anhand des Drehzahlgradienten dn/dt gesteuert und durchgeführt werden, es müssen dann aber die oberen und unteren Schwellwerte getauscht werden.

**Patentansprüche**

1. Verfahren zum Unterdrücken von Schwingungen des Antriebsstranges eines Kraftfahrzeuges, bei dem ein von der Drehzahl (n) des Motors (1) abhängiger Segmentzeitgradient (TN_GRD) erfaßt und ausgewertet und bei Erkennen unzulässiger Schwingungen durch Verändern des Zündwinkels das Drehmoment des Motors (1) verringert wird, indem

- wenn der Segmentzeitgradient (TN_GRD) den unteren Schwellwert (SU) unterschreitet, ein das Motordrehmoment reduzierender Zündeingriff durchgeführt, d.h. eine Antiruckelfunktion ausgelöst wird, und

- wenn der Segmentzeitgradient (TN_GRD) den oberen Schwellwert (SO) überschreitet, der Zündeingriff aufgehoben wird;

wobei der untere und der obere Schwellwert (SU, SO) von der Motordrehzahl abhängig vorgegeben werden
**dadurch gekennzeichnet**,

- daß erste untere Schwellwerte (SU1) in einem ersten Kennfeld (12) und zweite untere, höhere Schwellwerte (SU2) in einem zweiten Kennfeld (13) abgelegt sind, auf das nach erstmaligem Auslösen der Antiruckelfunktion (AR) umgeschaltet wird.

2. Verfahren nach Anspruch 1, dadurch gekennzeichnet, daß nach einer vorgegebenen Anzahl von Auslösungen (ANZ_TRIG_AR) der Antiruckelfunktion oder nach einer vorgegebenen Zeitdauer (T_MAX_KF_AR) wieder von dem zweiten (13) erneut auf das erste Kennfeld (12) umgeschaltet wird.

3. Verfahren nach Anspruch 1, dadurch gekennzeichnet, daß die Antiruckelfunktion aktiviert wird, wenn eine Beschleunigungsanreicherung (BA) durch die Motorsteuerung erkannt wird, so daß die Antiruckelfunktion bei Unterschreiten des unteren Schwellwerts (SU) ausgelöst werden kann.

4. Verfahren nach Anspruch 1, dadurch gekennzeichnet, daß der untere und der obere Schwellwert (SU, SO) in Abhängigkeit von dem jeweils eingelegten Gang vorgegeben werden.

5. Verfahren nach Anspruch 1, dadurch gekennzeichnet, daß der Segmentzeitgradient (TN_GRD) bei niedrigen Drehzahlen aus zwei aufeinander folgen-den Segmentierten ($TN_{n-1}$, $TN_n$) und bei hohen Drehzahlen aus zwei aufeinander folgenden Um-drehungszeiten $TU_{n-1}$, $TU_n$) berechnet wird.

6. Verfahren nach Anspruch 1, dadurch gekennzeichnet, daß bei einem Umschalten auf das momentenreduzierende Zündkennfeld die Zündwinkel nach spät verstellt werden und daß der Betrag, um den sie nach spät verstellt werden, von der Drehzahl (n) und der Motorlast abhängig ist.

7. Verfahren nach Anspruch 1, dadurch gekennzeichnet, daß bei höheren Drehzahlen der untere Schwellwert (SU) größere Werte und der obere Schwellwert (SO) kleinere Werte als bei kleinen Drehzahlen annehmen.

8. Verfahren nach Anspruch 1, dadurch gekennzeichnet, daß die Verstellung des Zündwinkels um eine vorgegebene Zeitspanne verzögert wird.

9. Verfahren nach Anspruch 4, dadurch gekennzeichnet, daß die Zündwinkel nach Überschreiten einer vorgegebenen Maximalzeit (T_MAX), auch ohne daß der obere Schwellwert von dem Segmentzeitgradient (TN_GRD) überschritten wird, auf den ursprünglichen Wert zurück verstellt werden.

10. Motorsteuerung mit einer Unterdrückung von Schwingungen des Antriebsstranges eines Kraftfahrzeuges, mit Mitteln, die einen von der Drehzahl (n) des Motors (1) abhängigen Segmentzeitgradienten (TN_GRD) erfassen und auswerten und bei Erkennen unzulässiger Schwingungen durch Verändern des Zündwinkels das Drehmoment des Motors (1) verringern, und mit Mitteln, die

- wenn der Segmentzeitgradient (TN_GRD) einen unteren Schwellwert (SU) unterschreitet, eine Antiruckelfunktion auslösen, d.h. einen das Motordrehmoment reduzierenden Zündeingriff durchführen, und
- wenn der Segmentzeitgradient (TN_GRD) einen oberen Schwellwert (SO) überschreitet, den Zündeingriff aufheben;

wobei der untere und der obere Schwellwert (SU, SO) von der Motordrehzahl abhängig vorgegeben werden,
**dadurch gekennzeichnet, daß** sie ein erstes Kennfeld (12), in dem erste untere Schwellwerte abgelegt sind, sowie ein zweites Kennfeld (13) aufweist, in dem zweite, höhere Schwellwerte abgelegt sind und auf das nach erstmaligem Auslösen der Antiruckelfunktion umgeschaltet wird.

## Claims

1. Method for suppressing vibrations in the drive train of a motor vehicle, in which a segment time gradient (TN_GRD) dependent on the speed (n) of the engine (1) is detected and evaluated and the torque of the engine (1) is reduced by altering the ignition angle if impermissible vibration is detected, the procedure being one in which

- if the segment time gradient (TN_GRD) falls below the lower threshold value (SU), an ignition intervention which reduces the engine torque is carried out, i.e. an anti-bucking function is tripped, and
- if the segment time gradient (TN_GRD) exceeds the upper threshold value (SO), the ignition intervention is cancelled;

the lower and the upper threshold value (SU, SO) being specified as a function of the engine speed characterized

- in that first lower threshold values (SU1) are stored in a first performance graph (12) and second, higher threshold values (SU2) are stored in a second performance graph (13), to which a switchover is made after the anti-bucking function (AR) is tripped for the first time.

2. Method according to Claim 1, characterized in that a switchover is made back from the second (13) to the first performance graph (12) after a predetermined number of trippings (ANZ_TRIG_AR) of the anti-bucking function or after a predetermined time period (T_MAX_KF_AR).

3. Method according to Claim 1, characterized in that the anti-bucking function is activated if an acceleration enrichment (BA) by the engine control system is detected, allowing the anti-bucking function to be tripped when the lower threshold value (SU) is undershot.

4. Method according to Claim 1, characterized in that the lower and the upper threshold value (SU, SO) are specified as a function of the respectively selected gear.

5. Method according to Claim 1, characterized in that, at low engine speeds, the segment time gradient (TN_GRD) is calculated from two successive segments ($TN_{n-1}$, $TN_n$) and, at high engine speeds, is calculated from two successive revolution times ($TU_{n-1}$, $TU_n$).

6. Method according to Claim 1, characterized in that, upon a switchover to the torque-reducing ignition performance graph, the ignition angles are retarded and in that the amount by which they are retarded is dependent on the engine speed (n) and the engine load.

7. Method according to Claim 1, characterized in that the lower threshold value (SU) assumes higher values and the upper threshold value (SO) assumes smaller values at higher engine speeds than at low engine speeds.

8. Method according to Claim 1, characterized in that the adjustment of the ignition angle is delayed by a predetermined period of time.

9. Method according to Claim 4, characterized in that the ignition angles are adjusted back to the original value after a predetermined maximum time (T_MAX) has been exceeded, even if the upper threshold value is not exceeded by the segment time gradient (TN_GRD).

10. Engine control system with suppression of vibrations in the drive train of a motor vehicle, including means which detect and evaluate a segment time gradient (TN_GRD) dependent on the speed (n) of the engine (1) and reduce the torque of the engine (1) by altering the ignition angle if impermissible vibration is detected, and with means which

- if the segment time gradient (TN_GRD) falls below a lower threshold value (SU), trip an anti-bucking function i.e. carry out an ignition intervention which reduces the engine torque, and
- if the segment time gradient (TN_GRD) exceeds an upper threshold value (SO), cancel the ignition intervention;

the lower and the upper threshold value (SU, SO) being specified as a function of the engine speed, characterized in that it has a first performance graph (12), in which first, lower threshold values are stored, and a second performance graph (13), in which second, higher threshold values are stored and to which switchover is made after the anti-bucking function has been tripped for the first time.

## Revendications

1. Procédé de suppression des vibrations dans la ligne de transmission d'un véhicule automobile, selon lequel un gradient de segment-temps (TN GRD) dépendant de la vitesse de rotation (n) du moteur (1) est détecté et exploité et, lorsque des vibrations inadmissibles sont constatées, le couple du moteur (1) est réduit par modification de l'angle d'allumage, en prévoyant que :

- lorsque le gradient de segment-temps (TN_GRD) franchit la valeur de seuil inférieure (SU), il est procédé à une intervention sur l'allumage réduisant le couple moteur, ce qui signifie qu'une fonction antibroutement est mise en service, et
- lorsque le gradient de segment-temps (TN_GRD) franchit la valeur de seuil supérieure (SO), l'intervention sur l'allumage est supprimée,

la valeur de seuil inférieure et la valeur de seuil supérieure (SU, SO) étant préfixées d'une manière dépendant de la vitesse de rotation du moteur, caractérisé

en ce que des premières valeurs de seuil inférieures (SU1) sont placées dans une première table caractéristique (12) et des secondes valeurs de seuil inférieures (SU2), plus élevées, sont placées dans une seconde table caractéristique (13) vers laquelle il est procédé à une commutation après une mise en service de la fonction antibroutement (AR) pour la première fois.

2. Procédé selon la revendication 1, caractérisé en ce qu'après un nombre préfixé de mises en service (ANZ_TRIG_AR) de la fonction antibroutement ou après une période de temps préfixée (T_MAX_KF_AR), il est procédé à nouveau à une commutation en retour de la seconde table caractéristique (13) à la première table caractéristique (12).

3. Procédé selon la revendication 1, caractérisé en ce que la fonction antibroutement est activée lorsqu'une augmentation d'accélération (BA) est constatée par la commande de moteur, de sorte que la fonction antibroutement peut être mise en service lorsque la valeur de seuil inférieure (SU) est franchie.

4. Procédé selon la revendication 1, caractérisé en ce que la valeur de seuil inférieure et la valeur de seuil supérieure (SU, SO) sont préfixées d'une manière dépendant du rapport de vitesses chaque fois engagé.

5. Procédé selon la revendication 1, caractérisé en ce que le gradient de segment-temps (TN GRD) est calculé à partir de deux segments-temps successifs (TNn-1, TNn) pour de faibles vitesses de rotation et à partir de deux durées de tour complet (TUn-1, TUn) successives pour des vitesses de rotation élevées.

6. Procédé selon la revendication 1, caractérisé en ce que, lors d'une commutation à la table caractéristique d'allumage réduisant le couple, l'angle d'allumage est décalé dans le sens du retard et en ce que la valeur dont il est décalé dans le sens du retard dépend de la vitesse de rotation (n) et de la charge du moteur.

7. Procédé selon la revendication 1, caractérisé en ce que, pour des vitesses de rotation plus élevées, la valeur de seuil inférieure (SU) prend des valeurs plus grandes que pour des faibles vitesses de rotation et la valeur de seuil supérieure (SO) des valeurs plus petites.

8. Procédé selon la revendication 1, caractérisé en ce que le réglage de l'angle d'allumage est retardé d'une période de temps préfixée.

9. Procédé selon la revendication 4, caractérisé en ce qu'une fois une durée maximale (T_MAX) préfixée écoulée, même sans que la valeur de seuil supérieure ait été franchie par le gradient de segment-temps (TN_GRD), l'angle d'allumage est ramené à la valeur initiale.

10. Commande de moteur comportant une suppression des vibrations dans la ligne de transmission d'un véhicule automobile, comprenant des moyens qui détectent et exploitent un gradient de segment-temps (TN_GRD) dépendant de la vitesse de rotation (n) du moteur (1) et réduisent le couple du moteur (1) par une modification de l'angle d'allumage lorsque des vibrations inadmissibles sont constatées, et comprenant des moyens qui :

- mettent en service une fonction antibroutement, c'est-à-dire procèdent à une intervention sur l'allumage réduisant le couple moteur, lorsque le gradient de segment-temps (TN_GRD) franchit une valeur de seuil inférieure (SU) et
- suppriment l'intervention sur l'allumage lorsque le gradient de segment-temps (TN_GRD) franchit une valeur de seuil supérieure (SO),

la valeur de seuil inférieure et la valeur de seuil supérieure (SU, SO) étant préfixées d'une manière dépendant de la vitesse de rotation du moteur, caractérisée en ce qu'elle comprend une première table caractéristique (12), dans laquelle des premières valeurs de seuil inférieures sont placées, et une seconde table caractéristique (13) dans laquelle des secondes valeurs de seuil, plus élevées, sont placées et vers laquelle il est procédé à une commutation après la mise en service de la fonction antibroutement pour la première fois.

FIG 1

FIG 2

FIG 3

FIG 4

Fig. 4a

Fig. 4b

FIG 4a

START —20

21 ⟨ Bedingungen erfüllt ⟩ — nein

ja

22 ⟨ N<N_Schwelle ⟩

ja — nein

23 — TN_GRD = (TNn-TNn-1)/TNn

24 — TN_GRD = (TUn-TUn-1)/TUn

25 ⟨ ANZ_TRIG=1 ⟩

ja — nein

26 ⟨ TN-GRD < SU1 ⟩ — nein

27 ⟨ TN-GRD < SU2 ⟩ — nein

ja — ja

28 — Start des Zeit-zählers für T_MAX

29 — Zündwinkeleingriff mit Änderungsbegrenzung ->Momentenreduzierung

30 ⟨ TN-GRD > SO ⟩ — nein

ja

32 ⟨ T>T_MAX ⟩ — nein

ja

10

## F I G 4 b